# EUROPEAN PATENT APPLICATION

(11) **EP 1 821 497 A1**
(43) Date of publication of application: **22.08.2007**
(21) Application number: 05814153.2
(22) Date of filing: 08.12.2005
(51) Int. Cl.: H04L 29/08, H04L 1/00

(54) **WIRELESS COMMUNICATION APPARATUS**

(30) Priority: 05.01.2005 JP 2005000606
(71) Applicant: MATSUSHITA ELECTRIC INDUSTRIAL CO., LTD., Osaka 571-8501 (JP)
(72) Inventor: NAKA, Katsuyoshi, Matsushita Electric Industrial Co., Ltd., Osaka-shi, Osaka 540-6207 (JP); TAKAKUSAKI, Keiji, Panasonic Mobile Communications Co.,Ltd., Kanagawa 224-8539 (JP)
(74) Representative: Grünecker, Kinkeldey, Stockmair & Schwanhäusser Anwaltssozietät
(86) International application number: PCT/JP2005/022574
(87) International publication number: WO 2006/073038

(57) **Abstract**

A wireless communication apparatus capable of effectively controlling retransmission. In this wireless communication apparatus (100), a frame aggregation part (111) aggregates basic unit data units (e.g., MPDUs) and adds a header thereto to form an aggregated frame. In response to a retransmission request from a receiving station (wireless communication apparatus (200)) as to the aggregated frame, a frame dividing part (112) divides the data part of the aggregated frame into segmented data blocks to form segmented frames. A frame control part (170) classifies the segmented frames into some groups in accordance with the reception qualities, at the receiving station, of the segmented data blocks of the aggregated frame. A transmission control part (185) transmits only the segmented frames of a group the reception quality of which is below a predetermined level. In this way, the transmission efficiency can be improved as compared with the retransmission of the aggregated frame, whereby the system throughput can be improved and hence an effective retransmission control can be achieved.

## Description

### Technical Field

The present invention particularly relates to a wireless communication apparatus that employs automatic repeat requests.

### Background Art

Non-patent document 1 discloses frame aggregation as a scheme for improving throughput in a wireless LAN system. This frame aggregation scheme groups together relatively small frame data having the same MAC header information into one large frame for transmission.

Even when data is transmitted as a plurality of frames in the IEEE802.11 scheme, which does not employ frame aggregation, using the frame aggregation scheme to transfer one large frame makes it possible to reduce IFS (Inter-Frame Space, which refers to a predetermined waiting time between transfer frames) and MAC headers. A result of using the frame aggregation scheme is improved throughput of the overall system.
Non-patent Document 1: "HTSG-Throughput_Enhancement_via_Frame_Aggregation," Seoul National University and Samsung Advance Institute of Technology, May, 2003 IEEE802.11n assembly, 11-03-376r0-HTSG-Throughput_Enhancement_via_Frame_Ag gregation.ppt

### Disclosure of the Invention

### Problems to be Solved by the Invention

However, because it is necessary in conventional communication systems to retransmit information in the event of a collision of packets transmitted from another apparatus, or deterioration of the transmission environment or the like, a long, aggregated frame must be retransmitted in its entirety. However, when a long frame is received, although reception quality of the frame is not uniform across all parts of the frame, there is no consideration given to reception quality in individual parts. For that reason, efficient retransmission control has not been applied to conventional communication systems.

Therefore, an object of the present invention is to provide a wireless communication apparatus that enables efficient retransmission control.

### Means for Solving the Problem

The wireless communication apparatus of the present invention adopts a configuration having: a wireless communication apparatus comprising: an aggregated frame forming section that groups base data units, adds a header, and forms an aggregated frame; a divided frame forming section that divides a data part of the aggregated frame into divided data blocks and forms divided frames according to a retransmission request with respect to the aggregated frame from a receiving station; a grouping section that classifies the divided frames into groups according to reception quality of each divided data block of the aggregated frame at the receiving station; and a transmission control section that transmits only the divided frames of the group whose reception quality is below a predetermined level.

### Advantageous Effect of the Invention

The present invention provides a wireless communication apparatus that enables efficient retransmission control.

### Brief Description of the Drawings

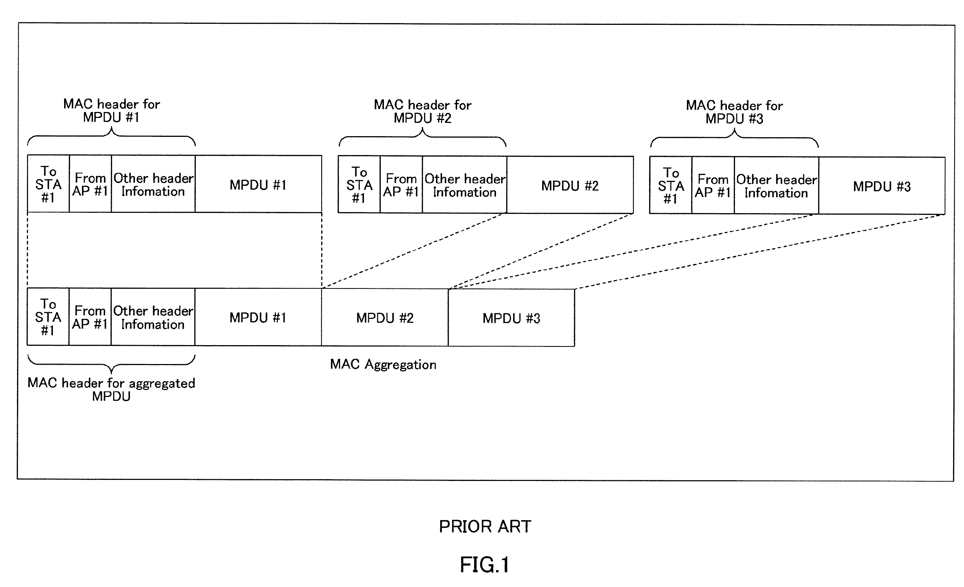

FIG.1 explains frame aggregation;
FIG.2 is a block diagram showing a configuration of a wireless communication apparatus according to a first embodiment of the present invention;
FIG.3 is a drawing to explain feedback signals to the wireless communication apparatus of FIG.2;
FIG.4 is a block diagram showing a configuration of a carrier sense time setting unit of FIG.2;
FIG.5 shows an aspect of divided frames being transmitted;
FIG.6 is a block diagram showing a configuration of another wireless communication apparatus according to a first embodiment of the present invention;
FIG.7 is a drawing to explain the operations of the communication system composed of the wireless communication apparatus of FIGs.2 and 6;
FIG.8 is a block diagram showing a configuration of a wireless communication apparatus according to a second embodiment of the present invention; and
FIG.9 shows an aspect of a re-aggregated frame being transmitted.

### Best Mode for Carrying Out the Invention

Embodiments of the present invention will now be explained in detail with reference to the drawings provided. Note that in each of the embodiments, the same reference numerals are applied to the same configuring elements, thus duplicated explanations thereof will be omitted.

### (Embodiment 1)

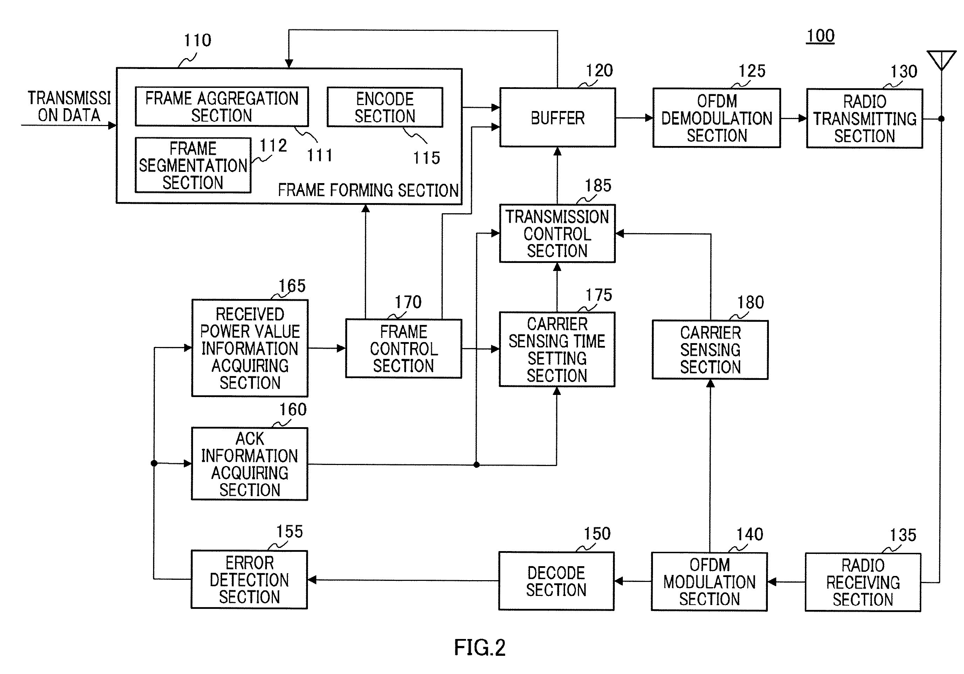

As shown in FIG. 2, wireless communication apparatus 100 comprises: a frame forming section 110; a buffer 120; an OFDM modulation section 125; radio transmitting section 130; radio receiving section 135; OFDM demodulation section 140; a decode section 150; an error detection section 155; an ACK information acquiring section 160; a received power value information acquiring section 165; a frame control section 170; a carrier sensing time setting section 175; a carrier sensing section 180; and a transmission control section 185. Also the frame forming section 110 includes a frame aggregation section 111, a frame segmentation section 112; and an encode section 115.

The frame forming section 110 forms inputted transmission data into a frame of a predetermined format. Specifically, the frame aggregation section 111 forms a long data part grouping a predetermined number of aggregated base data units (for example, MPDU (MAC Protocol Data Units)) using new transmission data, and adds one header part to that data part to form an aggregated frame. In the event that the receiving side was unable to correctly receive the aggregated frame, the receiving side will request a retransmission. The frame forming section 110 receives this aggregated frame from the buffer 120, and the frame segmentation section 112 divides the aggregated frame based on a segmentation command signal and retransmits the divided frames. Note that the segmentation command signal is a control signal inputted from the frame control section 170 to the frame forming section 110.

An aggregated frame outputted from the frame forming section 110 is encoded at the encode section 115,and then inputted to the buffer 120. The divided frames outputted from the frame forming section 110 are outputted to the buffer 120 as they are.

The buffer 120 retains the inputted signals and outputs to the OFDM modulation section 125 transmission signals that correspond to the transmission command signal from the transmission control section 185. Furthermore, the outputted signals from the buffer 120 are applied with a predetermined modulation (m-ary modulation, IFFT, etc.) at the OFDM modulation section 125 and then transmitted via an antenna after undergoing processing such as up-conversion at the radio transmitting section 130.

Still further, the buffer 120 outputs the retained aggregated frame to the frame forming section 110 according to the outputted command signal from the frame control section 170. Note that the output command signal is outputted from the frame control section 170 when the receiving side requests a retransmission of the aggregated frame. The buffer 120, upon receiving as input a delete command signal from the transmission control section 185, deletes the frames corresponding to that command signal. Also note that this delete command signal is outputted from the transmission control section 185 when the ACK information acquiring section 160 receives ACK and the ACK information acquiring section 160 inputs a corresponding frame number and ACK information to the transmission control section 185.

The received signal received via the antenna undergoes a process such as down-conversion or the like at the radio receiving section 135 and OFDM modulation at the OFDM demodulation section 140.

Signals after OFDM demodulation are decoded at the decode section 150 and then inputted to the error detection section 155.

The error detection section 155 checks the FCS (Frame Check Sequence) of the received signal to verify whether the received signal has been correctly received. A feedback signal from the receiving station that in responses to the aggregated frame is included in the received signal. In the event that the feedback signal is correctly received, the error detection section 155 divides the feedback signal into ACK/NACK information part and the received power value information part included in the feedback signal, and outputs these parts to the ACK information acquiring section 160 and to the received power value information acquiring section 165. If the feedback signal is erroneously received, the error detection section 155 outputs a parameter called "None" (no answer) to the ACK information acquiring section 160 and to the received power value information acquiring section 165.

The ACK information acquiring section 160 outputs to the transmission control section 185 and to a carrier sensing time setting section 175 reception success or failure information that corresponds to the inputted information. Specifically, the ACK information acquiring section 160 outputs the reception success or failure information indicating that the reception was successful, if the inputted ACK/NACK information block indicated ACK. Conversely, the ACK information acquiring section 160 outputs the reception success or failure information indicating that the reception was unsuccessful (i.e. failed) if the inputted ACK/NACK information block indicated NACK. Also, when the parameter for "None" is inputted to the ACK information acquiring section 160, the reception success or failure information that indicates reception was unsuccessful is outputted.

The received power value information part of the feedback signal from the wireless communication apparatus 200 described below is inputted to the received power value information acquiring section 165. Received power value information for each block in the data part in the aggregated frame is included in the feedback signal in the event that reception of the aggregated frame transmitted from the wireless communication apparatus 100 fails at the wireless communication apparatus 200 (in other words, only when a request for retransmission is issued). Therefore, input of the received power value information block to the received power value information acquiring section 165 occurs only when the reception of the aggregated frame fails.

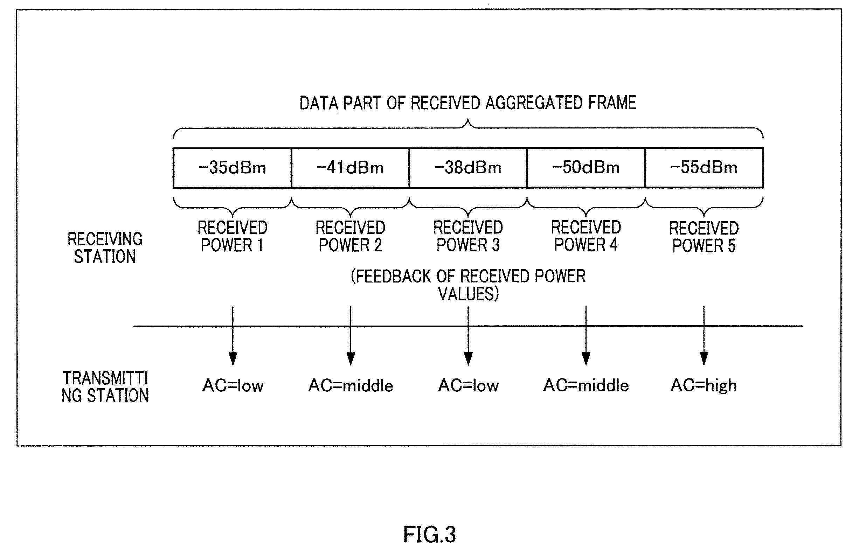

As shown in detail in FIG.3, received power is measured for each block of the data part of the aggregated frame at the receiving station, (that is, at the wireless communication apparatus 200). Each block is equivalent to the base data unit used when aggregated frames are generated. Also, when reception of the aggregated frame is unsuccessful at the receiving station, the received power value information of each block is included in a feedback signal and transmitted to the transmitting station, that is, the wireless communication apparatus 100.

The received power value information acquiring section 165 reads the received power value for each block from the inputted received power value information block, and transmits the received power value for each read block to the frame control section 170.

The frame control section 170 receives as input the received power value for each block to determine an access category (AC) for each divided frame according to the received power value. Specifically, as shown in FIG. 3, the received power value is changed into access categories at the frame control section 170. More specifically, the access category is low (low priority) when the received power is equal to or greater than -40dBm and less than -30dBm. When the received power is equal to or greater than -50dBm and less than -40 dBm, the access category is middle (mid-priority). When the received power is equal to or greater than -60 dBm and less than -50 dBm, the access category is high (high-priority). Note that these access categories are used when computing carrier sensing times at the carrier sensing time setting section 175. If there is an access category that indicates that there is frame of high priority, that frame is likely to have a short carrier sensing time set and transmitted with priority. In other words, the frame control section 170 is capable of grouping divided frames according to the received power value by determining access categories that correspond to the received power values of the divided frames. By grouping divided frames in this way, retransmission for each group can be controlled. For example, it is possible to control not to retransmit a certain group or to control to determine the retransmission order of groups to be retransmitted.

Also, the frame control section 170 outputs access categories for each determined divided group to the carrier sensing time setting section 175. Then, an output command signal for the aggregated frame to be divided is outputted to the buffer 120, and then a segmentation command signal is outputted to the frame forming section 110. By doing so, the aggregated frame given a retransmission request from the receiving station is divided at the frame forming section 110 to form divided frames.

The carrier sensing time setting section 175 determines theAIFS (Arbitration Inter-Frame Space) value according to the inputted access category, and determines a contention window according to the access category and the number of retransmissions. A random back-off value is determined in the range of the contention window. The carrier sensing time found by the sum of the AIFS value and the random back-off value is determined. The carrier sensing time is determined for each divided frame.

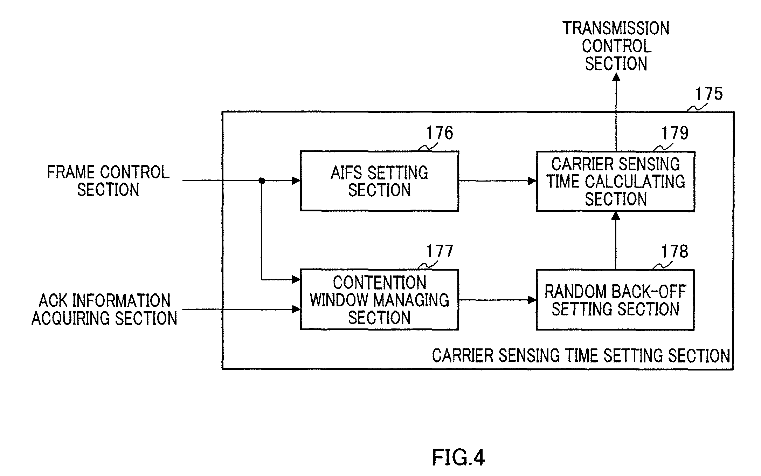

As shown in detail in FIG.4, the AIFS value corresponding to the inputted access category is set at an AIFS setting section 176. Also, a contention window managing section 177 counts the number of times it received the reception success or failure information indicating reception failure (with respect to the same frame) transmitted from the ACK information acquiring section 160 (in other words, the number of retransmissions), and determines the size of the contention window according to this number of retransmissions. The contention window managing section 177 resets the count of the number of retransmissions relating to that frame when reception success or failure information indicating reception was successful, is received for that frame.

A random back-off setting section 178 randomly determines the back-off value within the range of the contention window size determined at the contention window managing section 177.

A carrier sensing time calculating section 179 calculates the carrier sensing time by finding the sum of the AIFS value determined at the AIFS setting section 176 and the back-off value determined at the random back-off setting section 178.

The carrier sensing time setting section 175 sets the carrier sensing time to infinity so that groups of divided frames assigned low priority for their access categories, are not retransmitted. Doing so makes it possible to improve system throughput because not all corresponding divided groups are retransmitted when there is a retransmission request for an aggregated frame. Note that the throughput is further improved by also not retransmitting middle priority groups. However, as the priority increases (in other words, as the received power value decreases), the need for retransmission increases at the receiving station. Therefore, the setting of a threshold to classify which groups are retransmitted and which groups are not retransmitted, depends upon implementation at the wireless communication apparatus.

The carrier sensing section 180 performs carrier sensing, that is, detects whether another wireless communication apparatus is communicating using signals after OFDM demodulation. The detection result (carrier sensing result) is outputted to the transmission control section 185.

The transmission control section 185 controls the output of the transmission frame from the buffer 120. Specifically, when a transmission signal from another wireless communication apparatus is not detected within the carrier sensing time determined at the carrier sensing time setting section 175, the wireless communication apparatus 100 is able to transmit a transmission signal, so the transmission control section 185 outputs a transmission command signal to the buffer 120.

Upon receiving as input reception success or failure information from the ACK information acquiring section 160 indicating that the reception was successful, the transmission control section 185 outputs the frame (including the aggregated frame and divided frames) delete command signal to the buffer 120 because the frame was correctly received at the receiving side. Conversely, upon receiving as input reception success or failure information from the ACK information acquiring section 160 indicating reception was unsuccessful, the transmission control section 185 maintains standby until the divided frame carrier sensing time is inputted from the carrier sensing time setting section 175.

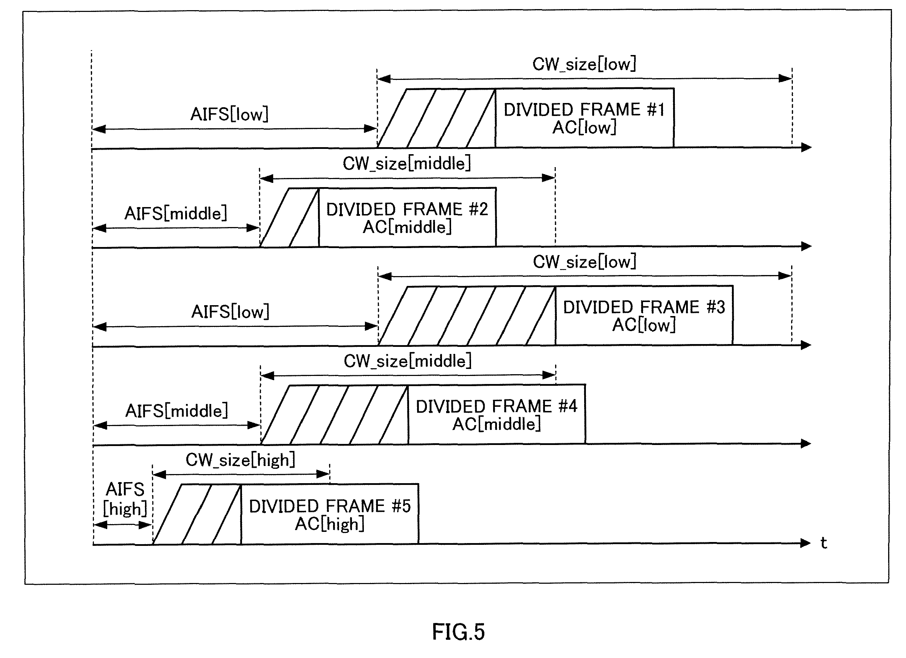

FIG.5 shows an aspect of a divided frame being transmitted by control of the transmission control section 185. In this embodiment, the access categories of each divided frames are set according to received power values. Specifically, divided frames that correspond to blocks with low received power values are set to a high priority access category. Consequently, the transmission command signal for divided frames with high priority is outputted at an earlier timing than other divided frames. In FIG.5, the highest priority access category is given to divided frame #5 because it has the lowest received power value. Therefore, the divided frame #5 is transmitted at the earliest timing.

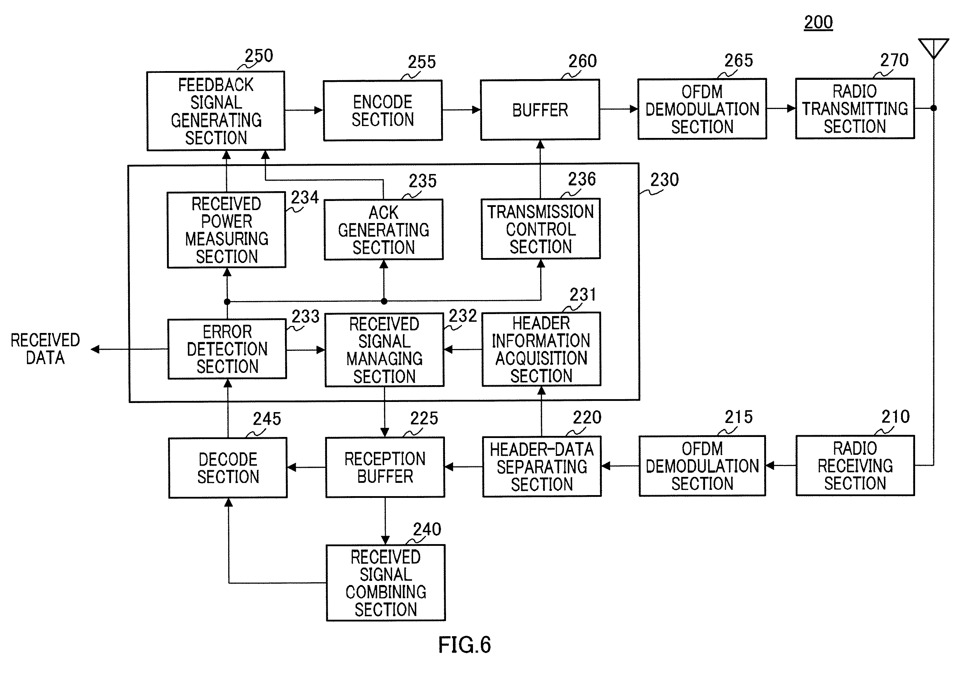

As shown in FIG.6, the wireless communication apparatus 200 has: a radio receiving section 210; an OFDM demodulation section 215; a header-data separating section 220; a reception buffer 225; a control section 230; a received signal combining section 240; a decode section 245; a feedback signal generating section 250; an encode section 255; a buffer 260; an OFDM modulation section 265; and a radio transmitting section 270. The control section 230 includes: a header information acquiring section 231; a received signal managing section 232; an error detection section 233; a received power measuring section 234; an ACK generating section 235; and a transmission control section 236.

Frames transmitted from the wireless communication apparatus 100 undergo a predetermined process at the radio receiving section 210 and OFDM demodulation section 215, and are inputted to the header-data separating section 220.

The header-data separating section 220 divides an inputted received frame into its header part and data part, then outputs the header part to the control section 230, and outputs the data part to the reception buffer 225.

The header information acquiring section 231 of the control section 230 receives as input the header part from the header-data separating section 220. Information (frame type information) indicating whether the frame whose header part has been divided therefrom, is a newly transmitted frame (in other words, an aggregated frame) or the frame is a retransmitted frame, (in other words, a divided frame), and a divided frame identification number if it is a divided frame, are included in the header part. Also, the frame type information and divided frame identification number are outputted to the received signal managing section 232.

When the frame type information from the header information acquiring section 231 indicates an aggregated frame, the received signal managing section 232 outputs an output command signal to the buffer 225 that commands to output the data part of that aggregated frame to the decode section 245. The received signal managing section 232 outputs the divided frame identification number of the divided frame to the reception buffer 225 when the frame type information from the header information acquiring section 231 indicates a divided frame. In this way, every time a divided frame for retransmission is inputted, the buffer 255 outputs to the received signal combining section 240 the data part corresponding to the divided frame identification number, and also outputs the data part of an aggregated frame including the data part of that previously transmitted divided frame.

Also, the received signal managing section 232 deletes the corresponding data part by outputting the delete command signal to the reception buffer 225 when the reception success or failure information is inputted from the error detection section 233 indicating reception was successful.

The received signal combining section 240 receives as input the data part of the divided frame from the reception buffer 225 and its corresponding divided frame identification number, and the data part of the aggregated frame including the data part of that divided frame transmitted previously. Then, the received signal combining section 240 combines the data part of the divided frame and its corresponding data part of the aggregated frame to normalize the average power at each combined part. After the combining process, the data part of the aggregated frame is outputted to the decode section 245.

The divided frames transmitted from the wireless communication apparatus 100 are transmitted with the priority of the received power value of the data part of the aggregated frame that corresponds to the divided frame, as described above. When this aggregated frame is not received correctly at the wireless communication apparatus 200, it is retransmitted in divided frames when a retransmission request is issued to the wireless communication apparatus 100. The part of the data part of the aggregated frame where received power value is low is the part that particularly requires retransmission. Therefore, radio communication apparatus 100 applies priority to divided frames according to the receivedpower value at the wireless communication apparatus 200 and transmits the divided frames, so that the wireless communication apparatus 200 is able to receive data parts that have a high need for retransmission. Therefore, reception quality at the wireless communication apparatus 200 is significantly improved even if control is performed such that not all divided frames are retransmitted.

The decode section 245 applies appropriate error correction decoding on the outputted signals from the reception buffer 225 and from the received signal combining section 240 and outputs the results to the error detection section 233.

The error detection section 233 runs an FCS check on the signals after error correction decoding to detect whether the signals transmitted from the wireless communication apparatus 100 were correctly received. If it is detected that the signals were correctly received, the error detection section 233 outputs the signals from the decode section 245 as received data, and outputs the reception success or failure information indicating reception was successful, to the received signal managing section 232, the ACK generating section 235 and the transmission control section. Having received this, the received signal managing section 232 outputs a delete command for the corresponding frame data part to the reception buffer 225, thereby clearing the data retained at the reception buffer 225.

Here, there are also cases of the error detection section 233 detecting that the divided frames are being received correctly before all of the divided frames transmitted from the wireless communication apparatus 100 are received. In such cases, the ACK is transmitted from the feedback signal generating section 250 as described below. The wireless communication apparatus 100 that receives ACK, controls to delete the divided frames scheduled for transmission that correspond to that ACK. By doing so, it is possible to stop transmitting divided frames scheduled for transmission from the wireless communication apparatus 100 when errors on previously received aggregated frame are corrected, thereby further improving system throughput. As described above, data parts of the divided frames with a high need for retransmission in the wireless communication apparatus 200 are transmitted in order from the wireless communication apparatus 100, so that the timing for error correction in the previously received aggregated frame is earlier. The timing to stop transmitting divided frames scheduled for transmission from the wireless communication apparatus 100 is earlier, so that system throughput further improves.

Also, when the error detection section 233 detects that an error is received, the error detection section 233 outputs reception success or failure information indicating reception was unsuccessful, to the received power measuring section 234, the ACK generating section 235 and the transmission control section 236, and outputs the data part of the detected frame to the received power measuring section 234.

The received power measuring section 234, upon receiving the reception success or failure information indicating reception was unsuccessful, measures the average received power for each block of the data part using the data part of the frame received as input (see FIG.3). The average received power value for each block is outputted to the feedback signal generating section 250. Note that in this embodiment, average receivedpower values are used as an index for reception quality of each block, but it is also acceptable to use average SIR, or average soft decision values for example.

The ACK generating section 235 receives as input the reception success or failure information and when this reception success or failure information indicates reception was successful, the ACK generating section 235 generates and outputs ACK to the feedback signal generating section 250. Also, when the reception success or failure information indicates that reception was unsuccessful, NACK is generated and outputted to the feedback signal generating section 250.

The transmission control section 236 controls the transmission of signals in the buffer 260. Also, upon receiving as input the reception success or failure information, the transmission control section 236 outputs the transmission command signal (including a transmission command and transmission timing) to the buffer 260.

The feedback signal generating section 250, upon receiving as input ACK from the ACK generating section 235, outputs ACK as it is. Also, when NACK is inputted from the ACK generating section 235, the feedback signal generating section 250 generates a feedback signal frame that includes the index (here the average received power value) indicating the reception quality of each block inputted from that NACK and the received power measuring section 234, and outputs that frame to the encode section 255.

The output signals from the feedback signal generating section 250 undergo error correction encoding at the encode section 255 and are retained at the buffer 260. Then, the buffer 260 transmits the retained signals to the wireless communication apparatus 100 at the control of the transmission control section 236 via the OFDM modulation section 265 and radio transmitting section 270.

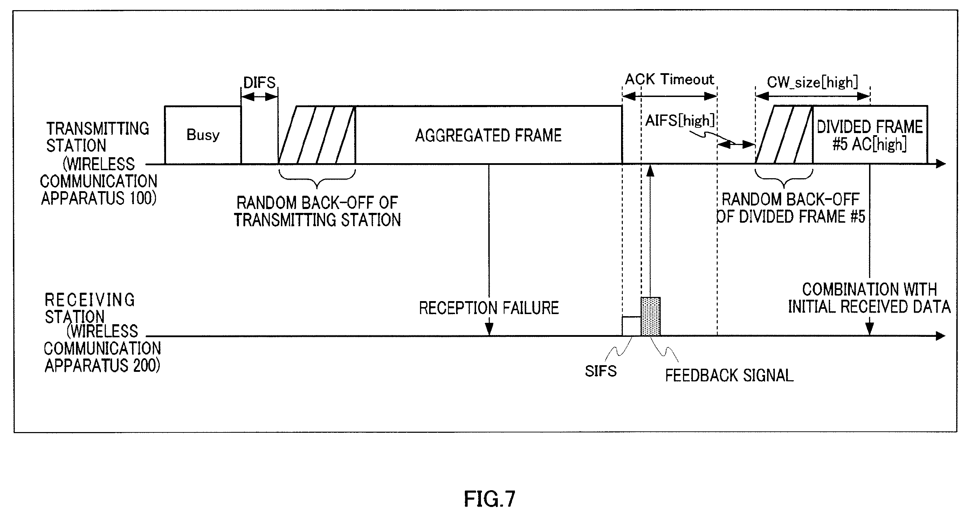

The following will now explain the actions of the communication system composed of the wireless communication apparatus 100 and the wireless communication apparatus 200 with reference to FIG.7.

Firstly, when the wireless communication apparatus 100 (the transmitting station) determines that the channel is idle, it performs carrier sensing for the determined carrier sensing time (DIFS and random back-off) for the aggregated frame to be transmitted. If, during that time, a transmission signal of another wireless communication apparatus is not detected, that aggregated frame is transmitted.

Next, the wireless communication apparatus 200 (the receiving apparatus) receives the aggregated frame transmitted from the wireless communication apparatus 100. However, FIG.7 shows a case where this reception is not correctly performed.

When the aggregated frame is received, the wireless communication apparatus 200 transmits the feedback signal to the wireless communication apparatus 100 after allowing a time interval of SIFS. Particularly, as shown in that drawing, if the aggregated frame cannot be correctly received, a feedback signal is returned that includes NACK, and the received power value of each block of the aggregated frame.

When the wireless communication apparatus 100 receives that feedback signal, that transmitted aggregated frame is divided at the frame segmentation section 112 and the frames are grouped according to the received power value of the block. Then, each group is assigned a priority order. Also, control is applied to transmit the divided frames to the wireless communication apparatus 200 starting with those divided frames included in groups with high priority order. FIG.7 shows a case where there is priority ordering, such as particularly shown in FIG.5. The divided frame #5, that is a divided frame assigned the access category of the highest priority (belonging to the group of the highest priority, in other words) is retransmitted.

The wireless communication apparatus 200, every time receiving a divided frame, synthesizes the corresponding block in a previously transmitted aggregated frame and the data part of that divided frame, and applies error detection again.

Note that in the explanation above, the received power value of each data part of aggregated frames received is measured at the wireless communication apparatus 200, and the measurement results are included in the feedback signal and transmitted. However, the present invention is not to be construed as being limited thereto, and instead of received power values, it is also acceptable to include average SIR measurement results of each data block and average soft decision values in the feedback signal. More specifically, it is acceptable if the reception quality of each data block is reported from the wireless communication apparatus 200 to the wireless communication apparatus 100.

Furthermore, the explanation above described including the received power values in a feedback signal and assigning access categories to divided frames according to the received power values in the wireless communication apparatus 100 that receives the feedback signal. However, the present invention is not to be construed to be limited thereto. It is also acceptable to convert received power values to corresponding access categories at the wireless communication apparatus 200 and include reception quality of each data block in the feedback signals in the form of an access category.

Also note that the base data unit, blocks that are units requiring a reception quality index, and the data part of divided frames were matched, but the present invention is not to be construed to be limited thereto. If blocks and data parts of divided frames correspond, it is not necessary to correspond to the base data unit . In other words, it is acceptable that units that are aggregated and units that are divided are different. However, in such cases, it is necessary to share information relating to units that are divided in advance, between the wireless communication apparatus 100 and wireless communication apparatus 200.

The first embodiment described above provides the wireless communication apparatus 100 with: a frame aggregation section 111 that groups base data units (for example, MPDU) and adds a header to form an aggregated frame; a frame segmentation section 112 that divides the data part into divided data blocks in response to a retransmission request for that aggregated frame from the receiving station (the wireless communication apparatus 200) to form divided frames; a frame control section 170 that divides the divided frames into groups according to the reception quality at the receiving station of each divided data block of the aggregated frame; and a transmission control section 185 that transmits only the divided frames of groups whose reception quality is below a predetermined level.

By doing so, only divided frames that are composed of divided data blocks with poor reception quality are transmitted, so that transmission efficiency is improved more than retransmitting the aggregated frame, system throughput is improved, and a wireless communication system that implements an efficient retransmit control is possible. Also, because it is possible at the receiving side to receive with priority divided data blocks of poor reception quality (in other words divided data blocks with a high need for retransmission), reception quality is improved even for a low amount of retransmission data.

Furthermore, the transmission control section 185 carries out transmission sequentially according to the transmission priority that corresponds to the reception quality of each block to be transmitted.

By doing so, it is possible to acceleratingly improve reception quality at the receiving side with the passage of time because transmission priority order according to reception quality is given to groups further classified according to reception quality in group to be transmitted.

Also, the first embodiment describes providing the wireless communication apparatus 200 with: a radio receiving section 210 that receives frames; a received power measuring section 234 that classifies data parts of received frames into a plurality of blocks to generate a reception quality index for each block; and a feedback signal generating section 250 that forms retransmission request frames including a reception quality index for each block when there is a retransmission request of the received frame.

By doing so, it is possible to transmit retransmission request frames that include a reception quality index for each block, so that it is possible to control retransmission on a per block basis at the retransmission request receiving side. For that reason, it is possible to control not to transmit (retransmit) blocks with good reception quality, and, by applying this control, it is not necessary to transmit all of the frames relating to the retransmission request, so that system throughput is improved.

### (Embodiment 2)

In the first embodiment, transmission was performed for each divided frame at the wireless communication apparatus 100. A feature of the second embodiment is to group divided frames and transmit an aggregated frame for each group.

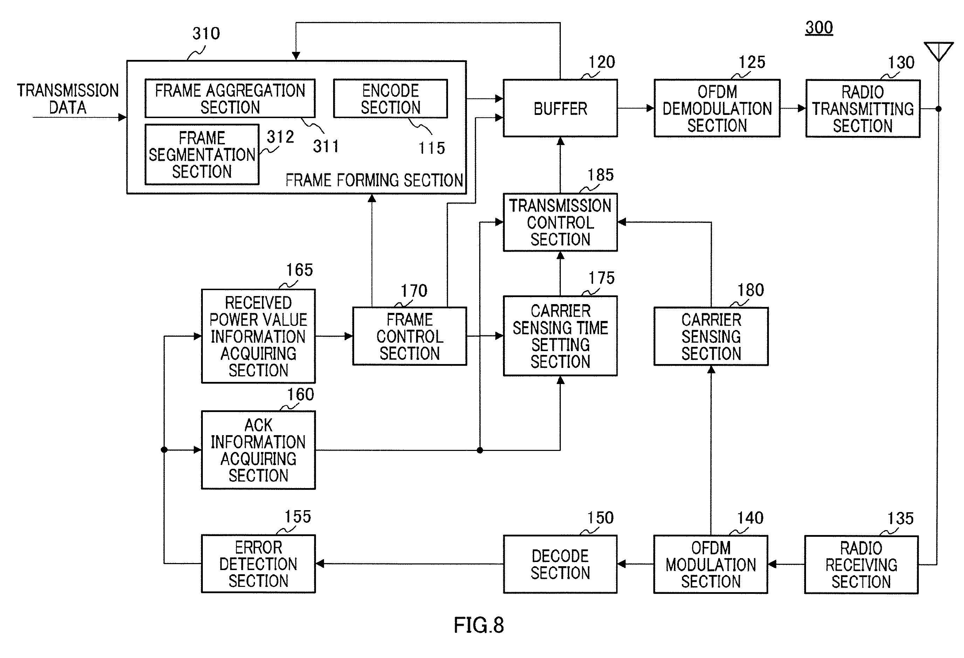

As shown in FIG.8, the wireless communication apparatus 300 has a frame forming section 310. The frame forming section 310 has a frame aggregation section 311 and a frame dividing section 312.

Basically, the frame forming section 310 performs the same operations as the frame forming section 110 of the wireless communication apparatus 100, but, when transmitting divided frames, not each divided frame is transmitted, and frame forming section 310 forms divided frames assigned the same access category at the frame aggregation section 311 into an aggregated frame again (hereinafter referred to as re-aggregated frame).

In the event that the receiving side was unable to correctly receive the aggregated frame and a retransmission request is issued, the frame forming section 312 receives this aggregated frame from the buffer 120 and divides the frame based on a segmentation command signal to form divided frames. These divided frames are inputted to the frame aggregation section 311.

The frame aggregation section 311 aggregates for each access category given to inputted divided frames to form re-aggregated frame. By aggregating and transmitting divided frames assigned the same access categories, the header parts and the number of retransmission frames can be reduced, so that the space between frames (IFS) is reduced.

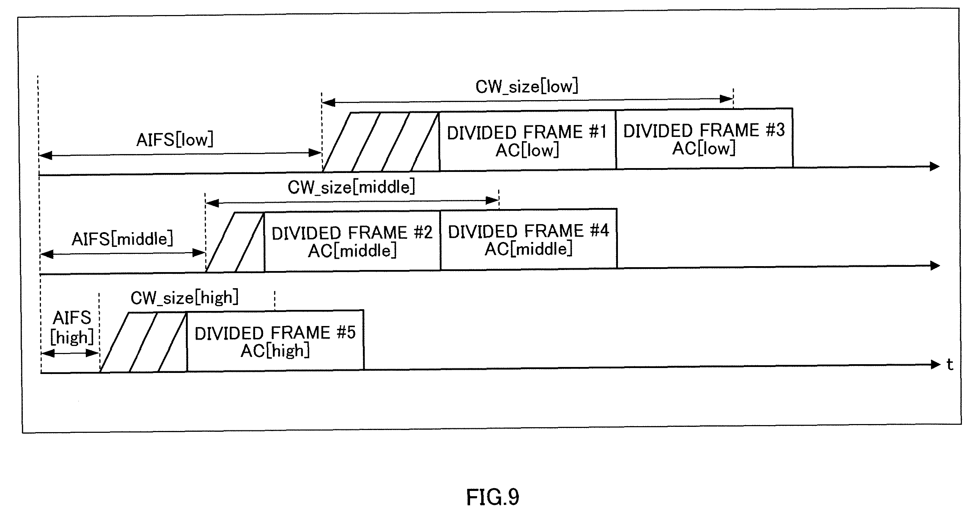

FIG.9 shows an aspect of a re-aggregated frame being transmitted by control of the transmission control section 185. In this embodiment, the access categories of each divided frame are set according to the reception quality index. Specifically, divided frames that correspond to blocks with low received power values are set to a high priority access category. Also, divided frames assigned the same access category are aggregated and transmitted as a re-aggregated frame. For that reason, the transmission command signal for re-aggregated frame aggregating divided frames with high priority is outputted at an earlier timing than other re-aggregated frames.

In FIG.9, the highest priority access category is given to divided frame #5 because it has the lowest received power value. Therefore, the divided frame #5 is transmitted at the earliest timing. Note that there are no other divided frames assigned the same access category as the divided frame #5, so the divided frame #5 is transmitted individually. However, if there is another divided frame given the same access category as the divided frame #5, a re-aggregated frame is formed between the divided frame #5 and that another divided frame.

The second embodiment described above provides the wireless communication apparatus 300 with: a frame aggregation section 311 that aggregates base data units (for example, MPDU) and adds a header to form an aggregated frame; a frame dividing section 312 that divides the data part of the aggregated frame, in response to a retransmission request for that aggregated frame from the receiving station (the wireless communication apparatus 200), into divided data blocks to form divided frames; a frame control section 170 that divides divided frames into groups according to the reception quality of each divided data block of the aggregated frame at the receiving station; and a transmission control section 185 that transmits only divided frames of groups whose reception quality is below a predetermined level.

Furthermore, the frame aggregation section 311 aggregates divided frames belonging to each group, and the transmission control section 185 transmits the frame grouping divided frames.

This reduces the header, and reduces the number of frames to be retransmitted, so that it is possible to reduce the spaces between frames (IFS).

The first aspect of the wireless communication apparatus of the present invention employs a configuration having: an aggregate frame forming section that groups base data units, and adds a header to form an aggregated frame; a divided frame forming section that divides the data part of the aggregated frame into divided data blocks in response to a retransmission request for that aggregated frame from the receiving station, to form divided frames; a grouping section that classifies divided frames into groups according to reception quality of each divided data block of the aggregated frame at the receiving station; and transmission control section that retransmits only divided frames of the group whose reception quality is below a predetermined level.

With such a configuration, only divided frames that are composed of divided data blocks with poor reception quality are transmitted, so that transmission efficiency is improved more than by retransmitting aggregated frames, and system throughput is therefore improved. Also, because it is possible at the receiving side to receive with priority divided data blocks of poor reception quality (in other words, divided data blocks with a high need for retransmission), reception quality is improved even for a low amount of retransmission data.

A second aspect of the wireless communication apparatus of the present invention employs a configuration where the transmission control section carries out transmission sequentially according to the transmission priority that corresponds to the reception quality of each block to be transmitted.

With this configuration, a group to be transmitted is further divided into groups and then these groups are assigned priority transmission order according to reception quality and transmitted, so that it is possible to acceleratingly improve reception quality at the receiving side with the passage of time.

A third aspect of the wireless communication apparatus of the present invention adopts a configuration where the grouping section uses the average received power value, average SIR or average soft decision value for each divided data block, as an index of reception quality.

A fourth aspect of the wireless communication apparatus of the present invention adopts a configuration where the aggregated frame forming section groups divided frames belonging to each group and the transmission control section transmits a frame grouping the divided frames.

This configuration reduces the header and reduces the number of frames to be retransmitted, so that it is possible to reduce the spaces between frames (IFS).

Also, a fifth aspect of the wireless communication apparatus of the present invention adopts a configuration having: a frame receiving section that receives a frame; a reception quality index generation section that classifies a data part of the frame into a plurality of blocks and generates a reception quality index of each group; and a frame generation section that generates a retransmission request frame that includes the reception quality index of each group when issuing a retransmission request for the received frame.

This configuration makes it possible to transmit a retransmission request frame that includes a reception quality index for each block, so that it is possible to control retransmission on a per block basis at the retransmission request receiving side. For that reason, it is possible to control not to transmit blocks with good reception quality, and applying this control makes it unnecessary to transmit all frames relating to a retransmission request, so that system throughput is improved.

The present application is based on Japanese patent application No.2005-000606, filed on January 5, 2005, the entire content of which is expressly incorporated herein by reference.

### Industrial Applicability

The wireless communication apparatus of the present invention enables efficient retransmission control and is particularly suitable for use as an access point or terminal in a wireless LAN system.

## Claims

1. A wireless communication apparatus comprising:
an aggregated frame forming section that groups base data units, adds a header, and forms an aggregated frame;
a divided frame forming section that divides a data part of the aggregated frame into divided data blocks and forms divided frames according to a retransmission request with respect to the aggregated frame from a receiving station;
a grouping section that classifies the divided frames into groups according to reception quality of each divided data block of the aggregated frame at the receiving station; and
a transmission control section that transmits only the divided frames of the group whose reception quality is below a predetermined level.

2. The wireless communication apparatus according to claim 1, wherein the transmission control section carries out transmission sequentially according to a transmission priority that corresponds to the reception quality of each group to be transmitted.

3. The wireless communication apparatus according to claim 1, wherein the grouping section uses an average received power value, an average signal to interference ratio or an average soft decision value of each divided data block as an index of reception quality.

4. The wireless communication apparatus according to claim 1, wherein:
the aggregated frame forming section aggregates the divided frames that belong to each group; and
the transmission control section transmits a frame aggregating the divided frames.

5. A wireless communication apparatus comprising:
a frame receiving section that receives a frame;
a reception quality index generation section that classifies a data part of the frame into a plurality of blocks and generates a reception quality index of each group; and
a frame generation section that generates a retransmission request frame that includes the reception quality index of each group when issuing a retransmission request for the received frame.
